# EUROPEAN PATENT APPLICATION

(11) **EP 3 203 797 A1**
(43) Date of publication of application: **09.08.2017**
(21) Application number: 16207393.6
(22) Date of filing: 10.11.2004
(51) Int. Cl.: H04W 72/12

(54) **WIRELESS COMMUNICATION METHOD AND APPARATUS FOR TRANSFERRING BUFFERED ENHANCED UPLINK DATA FROM A MOBILE STATION TO A NODE-B**

(30) Priority: 14.11.2003 US 520227 P; 20.09.2004 US 945361
(62) Divisional of application: 14181591.0
(71) Applicant: InterDigital Technology Corporation, Wilmington, DE 19809 (US)
(72) Inventor: TERRY, Stephen E., Northport, NY 11768 (US); DICK, Stephen G., Nesconset, NY 11767 (US); ZHANG, Guodong, Syosset, NY 11791 (US)
(74) Representative: Awapatent AB

(57) **Abstract**

A wireless communication method and apparatus for transferring buffered enhanced uplink (EU) data from a wireless transmit/receive unit (WTRU), i.e., a mobile station, to a Node-B. The EU data is generated and stored in a buffer of the WTRU. The WTRU transmits a message to the Node-B including a request for a desired transport format combination (TFC) or data traffic indicator. The Node-B schedules one or more allowed EU data transmissions between the WTRU and the Node-B by transmitting an EU data scheduling message to the WTRU. The WTRU transmits all of the EU data stored in the buffer to the Node-B if the allowed EU data transmissions are sufficient to support transmission of all of the EU data stored in the buffer. Otherwise, the WTRU transmits a portion of the EU data along with the desired TFC or detailed traffic volume measurement (TVM) information to the Node-B.

## Description

### FIELD OF INVENTION

The present invention is related to a wireless communication system including a wireless transmit/receive unit (WTRU) and a Node-B. More particularly, the present invention is related to providing WTRU uplink (UL) traffic information to the Node-B for scheduling enhanced uplink (EU) transmissions.

### BACKGROUND

Methods for enhancing UL coverage, throughput and transmission latency in a wireless communication system, such as a frequency division duplex (FDD) system, are currently being investigated in release 6 (R6) of the third generation partnership project (3GPP). Instead of scheduling and assigning UL physical channels in a radio network controller (RNC), a Node-B (i.e., a base station controller) is used to communicate with a plurality of WTRUs such that more efficient decisions can be made and UL radio resources can be managed on a short-term basis better than the RNC, even if the RNC retains overall control of the system. A similar approach has already been adopted in the downlink for release 5 (R5) of high speed data packet access (HSDPA) in a universal mobile telecommunications system (UMTS) for both an FDD mode and a time division duplex (TDD) mode.

In order for the Node-B to make efficient allocation decisions and prioritize between different data flows, the Node-B requires knowledge of UL data buffered in the WTRU for individual data channels along with their associated priority. However, conventional UL signaling methods have limited capacity, and thus may not be able to accommodate the reporting of detailed traffic volume measurement (TVM) information from the WTRU.

### SUMMARY

The present invention is a wireless communication method and apparatus for transferring buffered EU data from a WTRU, (i.e., a mobile station), to a Node-B. The apparatus may be a wireless communication system, a WTRU and/or an integrated circuit (IC). The EU data is generated and stored in a buffer of the WTRU. The WTRU transmits an initial EU data transmission request message to the Node-B indicating that the WTRU has EU data to transfer to the Node-B. The initial EU data transmission request message includes a request for a desired transport format combination (TFC) or data traffic indicator. In response to receiving the initial EU data transmission request message, the Node-B schedules one or more allowed EU data transmissions between the WTRU and the Node-B by transmitting an EU data scheduling message to the WTRU. The WTRU transfers all of the EU data stored in the buffer to the Node-B if the allowed EU data transmissions are sufficient to support transmission of all of the EU data stored in the buffer. Otherwise, the WTRU transmits a portion of the EU data along with the desired TFC or detailed TVM information to the Node-B.

The procedure used to transfer EU data stored in the buffer of the WTRU may be dependent upon whether or not the quantity of the EU data exceeds an established threshold. The initial EU data transmission request message may be transmitted to the Node-B only after the quantity of the stored EU data exceeds the established threshold. When the established threshold is not exceeded, the WTRU may transfer all of the EU data from the buffer of the WTRU to the Node-B without requiring scheduling information from the Node-B. If the established threshold is set to zero, the WTRU may transfer the stored EU data from the buffer of the WTRU to the Node-B only after receiving scheduling information from the Node-B.

The EU data transmission request message may be identified in at least one layer 1 physical control field or layer 2 medium access control (MAC) header.

The desired TFC or data traffic indicator may be signaled in at least one physical control field on an EU dedicated physical control channel (EU-DPCCH). Another field on the EU-DPCCH may include other EU related messages. If there is no EU data for the WTRU to transfer to the Node-B that requires further scheduling, the physical control field is empty or not included.

In an alternate embodiment, the EU data transmission message may include a MAC header with a field including the desired TFC or detailed TVM information. The MAC header may further include one or more other EU MAC fields. When the MAC header is empty or not included, there is no EU data for the WTRU to transfer to the Node-B.

### BRIEF DESCRIPTION OF THE DRAWING(S)

A more detailed understanding of the invention may be had from the following description of a preferred example, given by way of example and to be understood in conjunction with the accompanying drawing wherein:
Figure 1 shows a wireless communication system operating in accordance with the present invention;
Figure 2 is a signal flow diagram for the system of Figure 1 when the EU data transmissions allowed by an EU data scheduling message are not sufficient to transmit all of the EU data buffered in the WTRU;
Figure 3 is a signal flow diagram for the system of Figure 1 when the EU data transmissions allowed by an EU data scheduling message are sufficient to transmit all of the EU data buffered in the WTRU;
Figure 4 shows a frame structure used for requesting EU data scheduling information via an EU channel in accordance with one embodiment of the present invention;
Figure 5 show a MAC PDU format used to indicate a desired TFC or detailed TVM information in accordance with an alternate embodiment of the present invention; and
Figure 6 is a flowchart of a process including method steps for transferring buffered EU data in accordance with the present invention.

### DETAILED DESCRIPTION OF THE PREFERRED EMBODIMENT(S)

Hereafter, the terminology "WTRU" includes but is not limited to a user equipment (UE), mobile station, fixed or mobile subscriber unit, pager, or any other type of device capable of operating in a wireless environment.

When referred to hereafter, the terminology "Node-B" includes but is not limited to a base station, site controller, access point or any other type of interfacing device in a wireless environment.

The present invention may be further applicable to TDD, FDD, and time division synchronous code division multiple access (TD-SCDMA), as applied to Universal Mobile Telecommunications System (UMTS), CDMA 2000 and CDMA in general, but is envisaged to be applicable to other wireless systems as well.

The features of the present invention may be incorporated into an IC or be configured in a circuit comprising a multitude of interconnecting components.

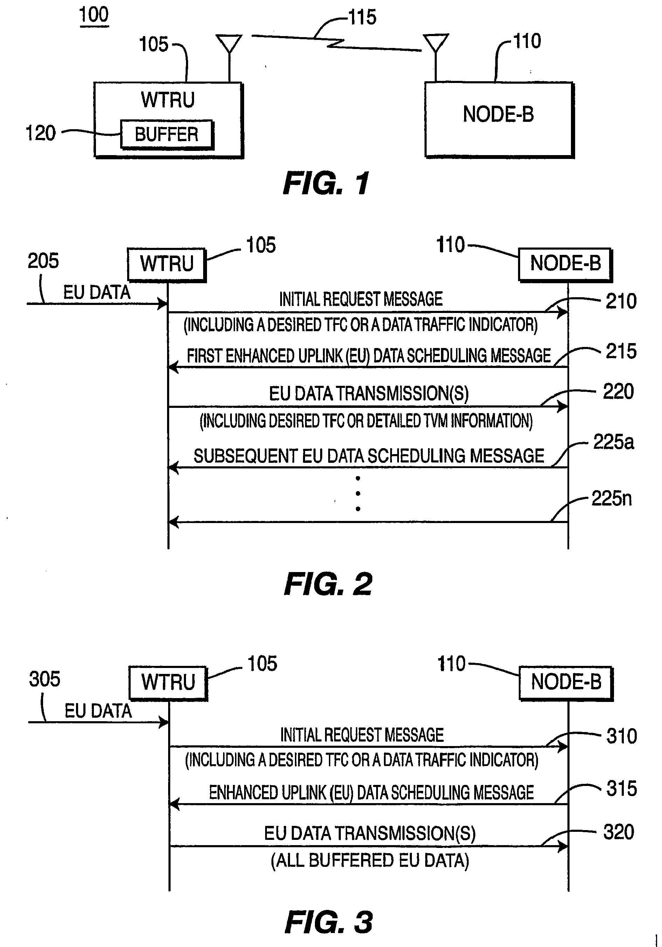

Figure 1 shows a wireless communication system 100 operating in accordance with the present invention. The system 100 includes a WTRU 105 and a Node-B 110 which communicate with each other via wireless signals 115. The WTRU 105 includes at least one buffer 120.

Figure 2 is a signal flow diagram for the wireless communication system 100 when one or more EU data transmissions allowed by a first EU data scheduling message are not sufficient to transmit all of the EU data stored in the buffer 120 of the WTRU 105. EU data 205 is generated at the WTRU 105 and is stored in the buffer 120 of the WTRU 105. When the quantity of the EU data in the buffer 120 exceeds an established EU data buffer threshold, the WTRU 105 sends an initial request message 210 to the Node-B 110 via an EU signaling channel. EU data transmissions sent by the WTRU 105 are not required to be scheduled by the Node-B 110 when the established threshold is not exceeded.

The initial request message 210 may include a desired TFC or a data traffic indicator. If the limited payload capacity of the EU control channel cannot accommodate the signaling of a desired TFC, the WTRU 105 may send a message to the Node-B 110 indicating that the WTRU 105 has EU data to transmit to the Node-B 110 via an EU control channel. The desired TFC may be an index to a preconfigured list of possible uplink transport formats (or TFCs).

Referring still to Figure 2, upon receiving the initial request message 210, the Node-B 110 schedules one or more EU data transmissions between the WTRU 105 and the Node-B 110 via a first EU data scheduling message 215. In response to receiving the first EU data schduling message 215, the WTRU 105 sends one or more EU data transmissions 220 to the Node-B 110 allowed by the first EU data scheduling message 215. If the EU data transmissions allowed by the first EU data scheduling message 215 are not sufficient to transmit all of the EU data buffered in the WTRU 105, the WTRU 105 sends EU data transmissions 220 including desired TFC information to the Node-B 110. The desired TFC information included in messages 210 and 220 may either be signaled in at least one physical control field or MAC header along with the EU data transmissions 220. The desired TFC may be reflected by an index into a list of predetermined TFCs. The desired TFC is used by the Node-B 110 to determine and generate subsequent scheduling messages 225a - 225n.

Alternatively, in lieu of the desired TFC information, detailed TVM information may be provided with the EU data transmissions 220. The detailed TVM information may indicate the amount of buffered data associated with individual traffic flows (channels) that can be associated with priority classes mapped to the EU dedicated channel (EU-DCH). Node-B 110 can utilize the comprehensive knowledge of the desired TFC or detailed TVM information and potentially associated priorities reported via the EU transmissions 220 to determine subsequent uplink scheduling. When the WTRU 105 obtains additional EU data later on, the WTRU 105 may choose to report updated desired TFC or detailed TVM information to the Node-B 110. The Node-B 110 then schedules subsequent EU data transmissions from the WTRU 105 to the Node-B 110 via subsequent EU data scheduling messages 225a - 225n.

Figure 3 is a signal flow diagram for the wireless communication system 100 when one or more EU data transmissions allowed by an EU data scheduling message are sufficient to transmit all of the EU data stored in the buffer 120 of the WTRU 105. EU data 305 is generated at the WTRU 105 and is stored in the buffer 120 of the WTRU 105. When the quantity of the EU data in the buffer 120 exceeds an established EU data buffer threshold, the WTRU 105 sends an initial request message 310 to the Node-B 110 via an EU signaling channel. The initial request message 310 may include a desired TFC or a data traffic indicator. If the limited payload capacity of the EU control channel cannot accommodate the signaling of a desired TFC, the WTRU 105 may send a message to the Node-B 110 indicating that the WTRU 105 has EU data to transmit to the Node-B 110 via an EU control channel. The desired TFC may be an index to a preconfigured list of possible uplink transmission formats (or TFCs).

EU data transmissions sent by the WTRU 105 are not required to be scheduled by the Node-B 110 when the established EU data buffer threshold is not exceeded.

Still referring to Figure 3, upon receiving the initial request message 310, the Node-B 110 schedules one or more EU data transmissions between the WTRU 105 and the Node-B 110 via an EU data scheduling message 315. In response to receiving the EU data scheduling message 315, the WTRU 105 sends one or more EU data transmissions 320 allowed by the EU data scheduling message 315. If the EU data transmissions allowed by the EU data scheduling message 315 are sufficient to transmit all of the EU data 305 buffered in the WTRU 105, all of the EU data stored in the buffer 120 of the WTRU 105 is sent to the Node-B 110. In this case, UL signaling information indicating the desired TFC or detailed TVM information is either not included or an associated message field is left empty, indicating that the WTRU 105 does not require further scheduling allocations.

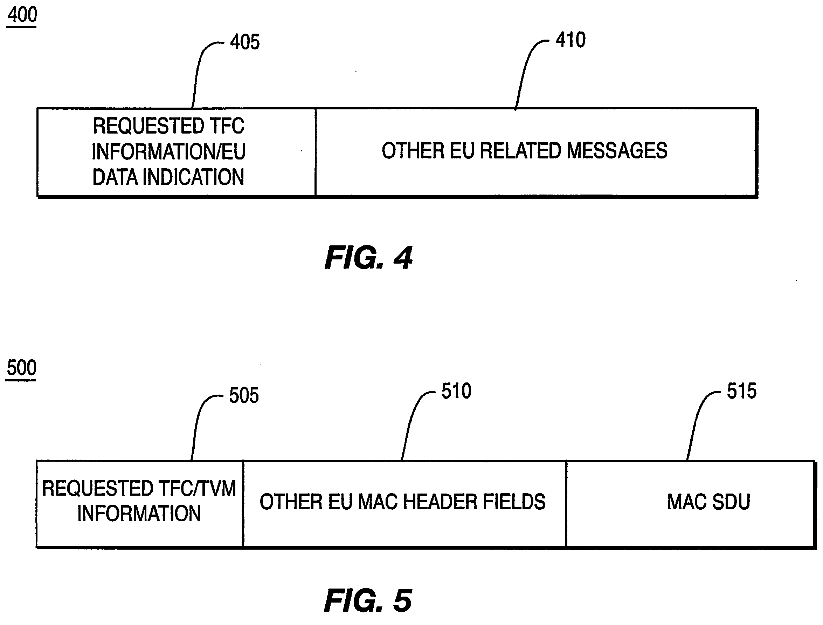

Figure 4 shows a frame structure 400 used for requesting EU data scheduling information via an EU channel in accordance with one embodiment of the present invention. The frame structure 400 may be incorporated into the initial request message 210 and, potentially, the EU data transmissions 220 previously described in conjunction with Figure 2.

The frame structure 400 includes a "requested TFC information / EU data indication" field 405 and an "other EU related messages" field 410. The requested TFC information / EU data indication field 405 is signaled in at least one physical control field on the EU-DPCCH. An empty requested TFC information / EU data indication field 405 indicates that there is no more buffered EU data for the WTRU 105 to send to the Node-B 110, and thus, no further scheduling allocations from the Node-B 110 are required. The EU-DPCCH may be code or time-multiplexed with an EU-DCH and/or a high speed dedicated physical control channel (HS-DPCCH).

Figure 5 shows a MAC protocol data unit (PDU) format 500 used to indicate a desired TFC or detailed TVM information in accordance with an alternate embodiment of the present invention. The MAC PDU format 500 may be incorporated into the EU data transmissions 220 and, potentially, the initial request message 210 previously described in conjunction with Figure 2.

The MAC PDU format 500 includes a "requested TFC/TVM information field" 505, one or more "other EU MAC header fields" 510, and a MAC SDU field 515. The requested TFC/TVM information field 505 is signaled within the MAC header of EU data transmissions. An empty requested TFC/TVM information field 505 indicates that there is no more buffered EU data for the WTRU 105 to send to the Node-B 110, and thus, no further scheduling allocations from the Node-B 110 are required.

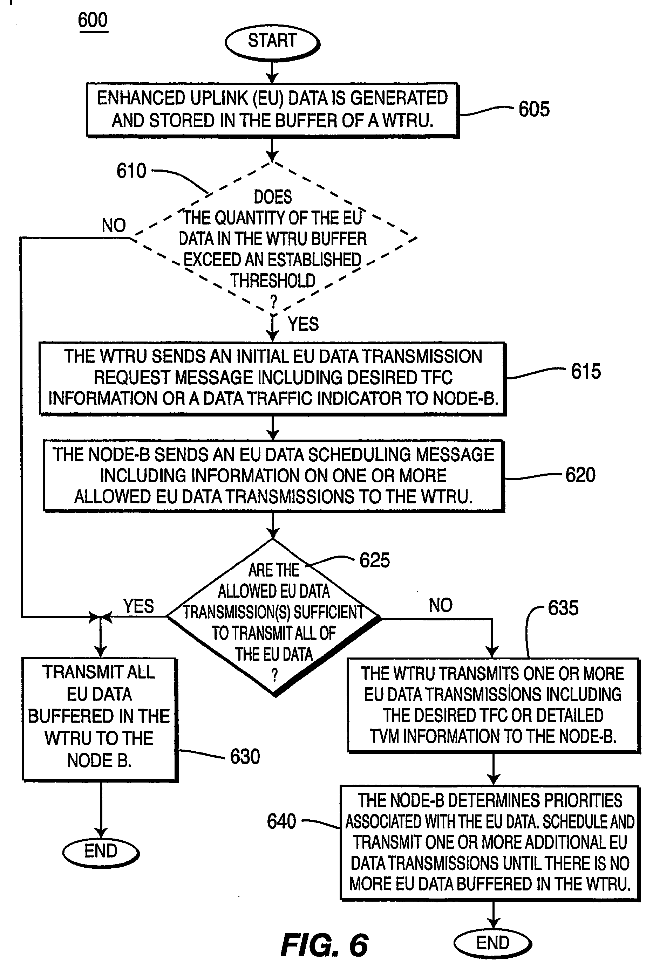

Figure 6 is a flowchart of a process 600 including method steps for transferring user data from the WTRU 105 to the Node-B 110 in accordance with the present invention. In step 605, EU data is generated and stored in the buffer 120 of the WTRU 105. In optional step 610, a determination is made as to whether or not the quantity of EU data stored in the buffer 120 of the WTRU 105 exceeds an established threshold. When the quantity of the stored EU data in the buffer 120 of the WTRU 105 does not exceed the established threshold, EU transmissions are allowed without Node-B scheduling, and all of the stored EU data is transmitted to the Node-B 110 (step 630). If the quantity of the stored EU data exceeds the established threshold, the WTRU 105 sends an initial EU data transmission request message including desired TFC information or just a traffic indicator (i.e., an EU data indication) to the Node-B 110 indicating that the WTRU 105 has EU data to send to the Node-B 110 (step 615).

It should be noted that the established EU data buffer threshold may be set to zero. In this case, the storage of any amount of EU data in the buffer 120 of the WTRU 105 will always trigger the transmission of an initial request message 210.

Still referring to Figure 6, in step 620, the Node-B 110 sends an EU data scheduling message, including information on one or more allowed EU data transmissions, to the WTRU 105 to schedule transmission of the EU data buffered in the WTRU 105 to the Node-B 110. In step 625, the WTRU 105 determines if the allowed EU data transmissions are sufficient to transmit all of the buffered EU data. If the EU data transmissions allowed by the current scheduling information are sufficient to support transmission of all of the EU data stored in the buffer 120, all of the EU data buffered in the WTRU 105 is transmitted to the Node-B 110 in the allowed EU data transmissions (step 630).

If the EU data transmissions allowed by the current scheduling information are not sufficient to transmit all of the EU data buffered in the WTRU 105, the WTRU 105 transmits one or more EU data transmissions including the desired TFC or detailed TVM information to the Node-B 110 (step 635). In step 640, the Node-B 110 determines priorities associated with the EU data. Node-B 110 utilizes the knowledge of the requested TFC or detailed TVM information, and associated priorities for determining the EU physical channel, and scheduling and transmitting one or more additional EU data transmissions until there is no more EU data buffered in the WTRU 105.

While this invention has been particularly shown and described with reference to preferred embodiments, it will be understood by those skilled in the art that various changes in form and details may be made therein without departing from the scope of the invention described hereinabove.

### ITEMIZED LIST OF EMBODIMENTS

Item 1. In a wireless communication system including at least one wireless transmit/receive unit (WTRU) and at least one Node-B, the WTRU including a buffer, a method for transferring enhanced uplink (EU) data from the WTRU to the Node-B, the method comprising:
   (a) the WTRU generating the EU data and storing the EU data in the buffer of the WTRU;
   (b) the WTRU transmitting to the Node-B an initial EU data transmission request message including a request for a desired transport format combination (TFC) or data traffic indicator, the initial EU data transmission request message indicating that the WTRU has EU data to transfer to the Node-B;
   (c) in response to receiving the initial EU data transmission request message, the Node-B scheduling one or more allowed EU data transmissions between the WTRU and the Node-B by transmitting an EU data scheduling message to the WTRU; and
   (d) the WTRU determining whether or not the allowed EU data transmissions are sufficient to support transmission of all of the EU data stored in the buffer.
Item 2. The method of item 1 wherein step (d) further comprises the WTRU transmitting all of the EU data stored in the buffer to the Node-B if the allowed EU data transmissions are sufficient to support transmission of all of the EU data stored in the buffer.
Item 3. The method of item 1 wherein step (d) further comprises the WTRU transmitting a portion of the EU data stored in the buffer along with the desired TFC or detailed traffic volume measurement (TVM) information to the Node-B if the allowed EU data transmissions are not sufficient to support transmission of all of the EU data stored in the buffer.
Item 4. The method of item 3 wherein the allowed EU data transmissions include a medium access control (MAC) header with a field including the desired TFC or detailed TVM information.
Item 5. The method of item 4 wherein the MAC header further comprises one or more other EU MAC header fields.
Item 6. The method of item 4 wherein there is no EU data for the WTRU to transfer to the Node-B when the MAC header field used to indicate the desired TFC or detailed TVM information is empty or not included.
Item 7. The method of item 1 wherein the desired TFC or data traffic indicator is signaled in at least one physical control field on an EU dedicated physical control channel (EU-DPCCH).
Item 8. The method of item 7 wherein another field on the EU-DPCCH includes other EU related messages.
Item 9. The method of item 7 wherein there is no EU data for the WTRU to transfer to the Node-B that requires further scheduling when the physical control field used to indicate the desired TFC or the data traffic indicator is empty.
Item 10. The method of item 7 wherein the EU-DPCCH is code or time-multiplexed with an EU dedicated channel (EU-DCH) or a high speed dedicated physical control channel (HS-DPCCH).
Item 11. The method of item 1 further comprising:
   (e) the WTRU establishing a threshold for the quantity of the stored EU data; and
   (f) the WTRU transmitting the initial EU data transmission request message to the Node-B only after the quantity of the stored EU data exceeds the established threshold.
Item 12. The method of item 1 further comprising:
   (e) the WTRU establishing a threshold for the quantity of the stored EU data; and
   (f) when the established threshold is not exceeded, the WTRU transferring all of the stored EU data from the buffer of the WTRU to the Node-B without requiring scheduling information from the Node-B.
Item 13. The method of item 1 further comprising:
   (e) the WTRU establishing a threshold for the quantity of the stored EU data;
   (f) setting the established threshold to a value of zero; and
   (g) the WTRU transferring the stored EU data from the buffer of the WTRU to the Node-B only after receiving scheduling information from the Node-B.
Item 14. In a wireless communication system including at least one wireless transmit/receive unit (WTRU) and at least one Node-B, the WTRU including a buffer, a method for transferring enhanced uplink (EU) data from the WTRU to the Node-B, the method comprising:
   (a) the WTRU generating the EU data and storing the EU data in the buffer of the WTRU;
   (b) the WTRU establishing a threshold for the quantity of the stored EU data;
   (c) if the quantity of the stored EU data exceeds the established threshold, the WTRU transmitting to the Node-B an initial EU data transmission request message including a request for a desired transport format combination (TFC) or data traffic indicator, the initial EU data transmission request message indicating that the WTRU has EU data to transfer to the Node-B and requires scheduling information; and
   (d) if the quantity of the stored EU data does not exceed the established threshold, the WTRU transferring all of the stored EU data from the buffer of the WTRU to the Node-B without the WTRU requiring scheduling information from the Node-B.
Item 15. In a wireless communication system including at least one wireless transmit/receive unit (WTRU) and at least one Node-B, the WTRU including a buffer, a method for transferring enhanced uplink (EU) data from the WTRU to the Node-B, the method comprising:
   (a) the WTRU generating the EU data and storing the EU data in the buffer of the WTRU;
   (b) establishing a threshold for the quantity of the stored EU data; and
   (c) if the established threshold is set to zero, the WTRU transmitting to the Node-B an initial EU data transmission request message including a request for a desired transport format combination (TFC) or data traffic indicator, the initial EU data transmission request message indicating that the WTRU has EU data to transfer to the Node-B and requires scheduling information.
Item 16. In a wireless communication system including at least one wireless transmit/receive unit (WTRU) and at least one Node-B, the WTRU including a buffer, a method for transferring enhanced uplink (EU) data from the WTRU to the Node-B, the method comprising:
   (a) the WTRU generating the EU data and storing the EU data in the buffer of the WTRU;
   (b) the Node-B scheduling one or more allowed EU data transmissions between the WTRU and the Node-B by transmitting an EU data scheduling message to the WTRU; and
   (c) the WTRU transferring all of the EU data stored in the buffer to the Node-B when the allowed EU data transmissions are sufficient to support transmission of all of the EU data stored in the buffer.
Item 17. In a wireless communication system including at least one wireless transmit/receive unit (WTRU) and at least one Node-B, the WTRU including a buffer, a method for transferring enhanced uplink (EU) data from the WTRU to the Node-B, the method comprising:
   (a) the WTRU generating the EU data and storing the EU data in the buffer of the WTRU;
   (b) the Node-B scheduling one or more allowed EU data transmissions between the WTRU and the Node-B by transmitting an EU data scheduling message to the WTRU; and
   (c) the WTRU transmitting a portion of the EU data stored in the buffer along with a desired transport format combination (TFC) or detailed traffic volume measurement (TVM) information to the Node-B when the allowed EU data transmissions are not sufficient to support transmission of all of the EU data stored in the buffer.
Item 18. In a wireless communication system including at least one wireless transmit/receive unit (WTRU) and at least one Node-B, the WTRU including a buffer, a method for transferring enhanced uplink (EU) data from the WTRU to the Node-B, the method comprising:
   (a) the WTRU generating the EU data and storing the EU data in the buffer of the WTRU;
   (b) the WTRU transmitting a desired transport format combination (TFC) or data traffic indicator in at least one physical control field on an EU dedicated physical control channel (EU-DPCCH) to the Node-B; and
   (c) the WTRU transmitting to the Node-B all of the EU data stored in the buffer along with a medium access control (MAC) header with a field including the desired TFC or detailed traffic volume measurement (TVM) information.
Item 19. In a wireless communication system including at least one wireless transmit/receive unit (WTRU) and at least one Node-B, the WTRU including a buffer, a method for transferring enhanced uplink (EU) data from the WTRU to the Node-B, the method comprising:
   (a) the WTRU generating the EU data and storing the EU data in the buffer of the WTRU; and
   (b) the WTRU transmitting all of the stored EU data to the Node-B along with a desired transport format combination (TFC) or detailed traffic volume measurement (TVM) information.
Item 20. In a wireless communication system including at least one wireless transmit/receive unit (WTRU) and at least one Node-B, the WTRU including a buffer, a method for transferring enhanced uplink (EU) data from the WTRU to the Node-B, the method comprising:
   (a) the WTRU generating the EU data and storing the EU data in the buffer of the WTRU;
   (b) the WTRU establishing a threshold for the quantity of the stored EU data; and
   (c) if the quantity of the stored EU data does not exceed the established threshold, the WTRU transmitting to the Node-B all of the stored EU data from the buffer of the WTRU to the Node-B, along with a desired transport format combination (TFC) or detailed traffic volume measurement (TVM) information.
Item 21. A wireless communication system comprising:
   (a) at least one wireless transmit/receive unit (WTRU) including a buffer; and
   (b) at least one Node-B, wherein:
      (i) enhanced uplink (EU) data is generated and stored in the buffer of the WTRU;
      (ii) the WTRU transmits to the Node-B an initial EU data transmission request message including a request for a desired transport format combination (TFC) or data traffic indicator, the initial EU data transmission request message indicating that the WTRU has EU data to transfer to the Node-B;
      (iii) in response to receiving the initial EU data transmission request message, the Node-B schedules one or more allowed EU data transmissions between the WTRU and the Node-B by transmitting an EU data scheduling message to the WTRU; and
      (iv) the WTRU determines whether or not the allowed EU data transmissions are sufficient to support transmission of all of the EU data stored in the buffer.
Item 22. The system of item 21 wherein, if the allowed EU data transmissions are sufficient to support transmission of all of the EU data stored in the buffer, the WTRU transmits all of the EU data stored in the buffer to the Node-B.
Item 23. The system of item 21 wherein, if the allowed EU data transmissions are not sufficient to support transmission of all of the EU data stored in the buffer, the WTRU transmits a portion of the EU data stored in the buffer along with the desired TFC or detailed traffic volume measurement (TVM) information to the Node-B.
Item 24. The system of item 23 wherein the allowed EU data transmissions include a medium access control (MAC) header with a field including the desired TFC or detailed TVM information.
Item 25. The system of item 24 wherein the MAC header further comprises one or more other EU MAC header fields.
Item 26. The system of item 24 wherein there is no EU data for the WTRU to transfer to the Node-B when the MAC header field used to indicate the desired TFC or detailed TVM information is empty or not included.
Item 27. The system of item 21 wherein the desired TFC or data traffic indicator is signaled in at least one physical control field on an EU dedicated physical control channel (EU-DPCCH).
Item 28. The system of item 27 wherein another field on the EU-DPCCH includes other EU related messages.
Item 29. The system of item 27 wherein there is no EU data for the WTRU to transfer to the Node-B that requires further scheduling when the physical control field used to indicate the desired TFC or the traffic indicator is empty.
Item 30. The system of item 27 wherein the EU-DPCCH is code or time-multiplexed with an EU dedicated channel (EU-DCH) or a high speed dedicated physical control channel (HS-DPCCH).
Item 31. The system of item 21 wherein a threshold is established for the quantity of the stored EU data, and the initial EU data transmission request message is sent to the Node-B only after the quantity of the stored EU data exceeds the established threshold.
Item 32. The system of item 21 wherein a threshold is established for the quantity of the stored EU data, and all of the stored EU data is transferred from the buffer of the WTRU to the Node-B without requiring scheduling information from the Node-B, when the established threshold is not exceeded.
Item 33. The system of item 21 wherein a threshold is established for the quantity of the stored EU data, and transmissions of the stored EU data are always scheduled by the Node-B when the established threshold is set to zero.
Item 34. A wireless communication system comprising:
   (a) at least one wireless transmit/receive unit (WTRU) including a buffer; and
   (b) at least one Node-B, wherein:
      (i) enhanced uplink (EU) data is generated and stored in the buffer of the WTRU;
      (ii) a threshold is established for the quantity of the stored EU data;
      (iii) if the quantity of the stored EU data exceeds the established threshold, the WTRU transmits to the Node-B an initial EU data transmission request message including a request for a desired transport format combination (TFC) or data traffic indicator, the initial EU data transmission request message indicating that the WTRU has EU data to transfer to the Node-B and requires scheduling information; and
      (iv) if the quantity of the stored EU data does not exceed the established threshold, all of the stored EU data is transferred from the buffer of the WTRU to the Node-B without being scheduled by the Node-B.
Item 35. A wireless communication system comprising:
   (a) at least one wireless transmit/receive unit (WTRU) including a buffer; and
   (b) at least one Node-B, wherein:
      (i) enhanced uplink (EU) data is generated and stored in the buffer of the WTRU;
      (ii) a threshold is established for the quantity of the stored EU data; and
      (iii) if the established threshold is set to zero, the WTRU transmits to the Node-B an initial EU data transmission request message including a request for a desired transport format combination (TFC) or data traffic indicator, the initial EU data transmission request message indicating that the WTRU has EU data to transfer to the Node-B and requires scheduling information.
Item 36. A wireless communication system comprising:
   (a) at least one wireless transmit/receive unit (WTRU) including a buffer; and
   (b) at least one Node-B, wherein:
      (i) enhanced uplink (EU) data is generated and stored in the buffer of the WTRU;
      (ii) the Node-B schedules one or more allowed EU data transmissions between the WTRU and the Node-B by transmitting an EU data scheduling message to the WTRU; and
      (iii) the WTRU transmits all of the EU data stored in the buffer to the Node-B when the allowed EU data transmissions are sufficient to support transmission of all of the EU data stored in the buffer.
Item 37. A wireless communication system comprising:
   (a) at least one wireless transmit/receive unit (WTRU) including a buffer; and
   (b) at least one Node-B, wherein:
      (i) enhanced uplink (EU) data is generated and stored in the buffer of the WTRU;
      (ii) the Node-B schedules one or more allowed EU data transmissions between the WTRU and the Node-B by transmitting an EU data scheduling message to the WTRU; and
      (iii) the WTRU transmits a portion of the EU data stored in the buffer along with a desired transport format combination (TFC) or detailed traffic volume measurement (TVM) information to the Node-B when the allowed EU data transmissions are not sufficient to support transmission of all of the EU data stored in the buffer.
Item 38. A wireless communication system comprising:
   (a) at least one wireless transmit/receive unit (WTRU) including a buffer; and
   (b) at least one Node-B, wherein:
      (i) enhanced uplink (EU) data is generated and stored in the buffer of the WTRU;
      (ii) the WTRU transmits a desired transport format combination (TFC) or data traffic indicator in at least one physical control field on an EU dedicated physical control channel (EU-DPCCH) to the Node-B; and
      (iii) the WTRU transmits to the Node-B a portion of the EU data stored in the buffer along with a medium access control (MAC) header with a field including the desired TFC or detailed traffic volume measurement (TVM) information.
Item 39. A wireless communication system comprising:
   (a) at least one wireless transmit/receive unit (WTRU) including a buffer; and
   (b) at least one Node-B, wherein:
      (i) enhanced uplink (EU) data is generated and stored in the buffer of the WTRU; and
      (ii) the WTRU transmits all of the stored EU data to the Node-B along with a desired transport format combination (TFC) or detailed traffic volume measurement (TVM) information.
Item 40. A wireless communication system comprising:
   (a) at least one wireless transmit/receive unit (WTRU) including a buffer; and
   (b) at least one Node-B, wherein:
      (i) enhanced uplink (EU) data is generated and stored in the buffer of the WTRU;
      (ii) the WTRU establishes a threshold for the quantity of the stored EU data; and
      (iii) if the quantity of the stored EU data does not exceed the established threshold, the WTRU transmits to the Node-B all of the stored EU data from the buffer of the WTRU to the Node-B, along with a desired transport format combination (TFC) or detailed traffic volume measurement (TVM) information.
Item 41. A wireless transmit/receive unit (WTRU) comprising:
   (a) a buffer;
   (b) means for generating enhanced uplink (EU) data and storing the EU data in the buffer;
   (c) means for transmitting an initial EU data transmission request message including a request for a desired transport format combination (TFC) or data traffic indicator, the initial EU data transmission request message indicating that the WTRU has EU data waiting to transmit;
   (d) means for receiving an EU data scheduling message used by the WTRU to schedule one or more allowed EU data transmissions from the WTRU; and
   (e) means for determining whether or not the allowed EU data transmissions are sufficient to support transmission of all of the EU data stored in the buffer.
Item 42. The WTRU of item 41 wherein, if the allowed EU data transmissions are sufficient to support transmission of all of the EU data stored in the buffer, the WTRU transmits all of the EU data stored in the buffer.
Item 43. The WTRU of item 41 wherein, if the allowed EU data transmissions are not sufficient to support transmission of all of the EU data stored in the buffer, the WTRU transmits a portion of the EU data stored in the buffer along with the desired TFC or detailed traffic volume measurement (TVM) information.
Item 44. The WTRU of item 43 wherein the allowed EU data transmissions include a medium access control (MAC) header with a field including the desired TFC or detailed TVM information.
Item 45. The WTRU of item 44 wherein the MAC header further comprises one or more other EU MAC header fields.
Item 46. The WTRU of item 44 wherein there is no EU data for the WTRU to transfer to the Node-B when the MAC header field used to indicate the desired TFC or detailed TVM information is empty or not included.
Item 47. The WTRU of item 41 wherein the desired TFC or data traffic indicator is signaled in at least one physical control field on an EU dedicated physical control channel (EU-DPCCH).
Item 48. The WTRU of item 47 wherein another field on the EU-DPCCH includes other EU related messages.
Item 49. The WTRU of item 47 wherein there is no EU data for the WTRU to transfer to the Node-B that requires further scheduling when the physical control field used to indicate the desired TFC or the traffic indicator is empty.
Item 50. The WTRU of item 47 wherein the EU-DPCCH is code or time-multiplexed with an EU dedicated channel (EU-DCH) or a high speed dedicated physical control channel (HS-DPCCH).
Item 51. The WTRU of item 41 wherein a threshold is established for the quantity of the stored EU data, and the initial EU data transmission request message is transmitted only after the quantity of the stored EU data exceeds the established threshold.
Item 52. The WTRU of item 41 wherein a threshold is established for the quantity of the stored EU data, and all of the stored EU data is transmitted from the buffer of the WTRU without requiring scheduling information when the established threshold is not exceeded.
Item 53. The WTRU of item 41 wherein a threshold is established for the quantity of the stored EU data, and the transmission of the stored EU data is always scheduled when the established threshold is set to zero.
Item 54. A wireless transmit/receive unit (WTRU) comprising:
   (a) a buffer;
   (b) means for generating enhanced uplink (EU) data and storing the EU data in the buffer;
   (c) means for establishing a threshold for the quantity of the stored EU data;
   (d) means for transmitting, if the quantity of the stored EU data exceeds the established threshold, an initial EU data transmission request message including a request for a desired transport format combination (TFC) or data traffic indicator, the initial EU data transmission request message indicating that EU data is available for transmission and scheduling information is required; and
   (e) means for transmitting, if the quantity of the stored EU data does not exceed the established threshold, all of the stored EU data from the buffer without requiring scheduling information.
Item 55. A wireless transmit/receive unit (WTRU) comprising:
   (a) a buffer;
   (b) means for generating enhanced uplink (EU) data and storing the EU data in the buffer;
   (c) means for establishing a threshold for the quantity of the stored EU data; and
   (d) means for transmitting, if the established threshold is set to zero, an initial EU data transmission request message including a request for a desired transport format combination (TFC) or data traffic indicator, the initial EU data transmission request message indicating that EU data is available for transmission and scheduling information is required.
Item 56. A wireless transmit/receive unit (WTRU) comprising:
   (a) a buffer;
   (b) means for generating enhanced uplink (EU) data and storing the EU data in the buffer;
   (c) means for receiving a scheduling message that schedules one or more allowed EU data transmissions; and
   (d) means for transmitting all of the EU data stored in the buffer when the allowed EU data transmissions are sufficient to support transmission of all of the EU data stored in the buffer.
Item 57. A wireless transmit/receive unit (WTRU) comprising:
   (a) a buffer;
   (b) means for generating enhanced uplink (EU) data and storing the EU data in the buffer;
   (c) means for receiving a scheduling message that schedules one or more allowed EU data transmissions; and
   (d) means for transmitting a portion of the EU data stored in the buffer along with a desired transport format combination (TFC) or detailed traffic volume measurement (TVM) information when the allowed EU data transmissions are not sufficient to support transmission of all of the EU data stored in the buffer.
Item 58. A wireless transmit/receive unit (WTRU) comprising:
   (a) a buffer;
   (b) means for generating enhanced uplink (EU) data and storing the EU data in the buffer;
   (c) means for transmitting a desired transport format combination (TFC) or data traffic indicator in at least one physical control field on an EU dedicated physical control channel (EU-DPCCH); and
   (d) means for transmitting a portion of the EU data stored in the buffer along with a medium access control (MAC) header with a field including the desired TFC or detailed traffic volume measurement (TVM) information.
Item 59. A wireless transmit/receive unit (WTRU) comprising:
   (a) a buffer;
   (b) means for generating enhanced uplink (EU) data and storing the EU data in the buffer; and
   (c) means for transmitting all of the stored EU data along with a desired transport format combination (TFC) or detailed traffic volume measurement (TVM) information.
Item 60. A wireless transmit/receive unit (WTRU) comprising:
   (a) a buffer;
   (b) means for generating enhanced uplink (EU) data and storing the EU data in the buffer;
   (c) means for establishing a threshold for the quantity of the stored EU data; and
   (d) means for transmitting all of the stored EU data from the buffer of the WTRU, along with a desired transport format combination (TFC) or detailed traffic volume measurement (TVM) information, if the quantity of the stored EU data does not exceed the established threshold.
Item 61. An integrated circuit (IC) comprising:
   (a) a buffer;
   (b) means for generating enhanced uplink (EU) data and storing the EU data in the buffer;
   (c) means for transmitting an initial EU data transmission request message including a request for a desired transport format combination (TFC) or data traffic indicator, the initial EU data transmission request message indicating that EU data is waiting to be transmitted;
   (d) means for receiving an EU data scheduling message used to schedule one or more allowed EU data transmissions; and
   (e) means for determining whether or not the allowed EU data transmissions are sufficient to support transmission of all of the EU data stored in the buffer.
Item 62. The IC of item 61 wherein, if the allowed EU data transmissions are sufficient to support transmission of all of the EU data stored in the buffer, the IC transmits all of the EU data stored in the buffer.
Item 63. The IC of item 61 wherein, if the allowed EU data transmissions are not sufficient to support transmission of all of the EU data stored in the buffer, the IC transmits a portion of the EU data stored in the buffer along with the desired TFC or detailed traffic volume measurement (TVM) information.
Item 64. The IC of item 63 wherein the allowed EU data transmissions include a medium access control (MAC) header with a field including the desired TFC or detailed TVM information.
Item 65. The IC of item 64 wherein the MAC header further comprises one or more other EU MAC header fields.
Item 66. The IC of item 64 wherein there is no EU data for the IC to transmit when the MAC header field used to indicate the desired TFC or detailed TVM information is empty or not included.
Item 67. The IC of item 61 wherein the desired TFC or data traffic indicator is signaled in at least one physical control field on an EU dedicated physical control channel (EU-DPCCH).
Item 68. The IC of item 67 wherein another field on the EU-DPCCH includes other EU related messages.
Item 69. The IC of item 67 wherein there is no EU data for the IC to transmit that requires further scheduling when the physical control field used to indicate the desired TFC or the traffic indicator is empty.
Item 70. The IC of item 67 wherein the EU-DPCCH is code or time-multiplexed with an EU dedicated channel (EU-DCH) or a high speed dedicated physical control channel (HS-DPCCH).
Item 71. The IC of item 61 wherein a threshold is established for the quantity of the stored EU data, and the initial EU data transmission request message is transmitted only after the quantity of the stored EU data exceeds the established threshold.
Item 72. The IC of item 61 wherein a threshold is established for the quantity of the stored EU data, and all of the stored EU data is transmitted from the buffer without requiring scheduling information when the established threshold is not exceeded.
Item 73. The IC of embodiment 61 wherein a threshold is established for the quantity of the stored EU data, and the transmission of the stored EU data is always scheduled when the established threshold is set to zero.
Item 74. An integrated circuit (IC) comprising:
   (a) a buffer;
   (b) means for generating enhanced uplink (EU) data and storing the EU data in the buffer;
   (c) means for establishing a threshold for the quantity of the stored EU data;
   (d) means for transmitting, if the quantity of the stored EU data exceeds the established threshold, an initial EU data transmission request message including a request for a desired transport format combination (TFC) or data traffic indicator, the initial EU data transmission request message indicating that EU data is available for transmission and scheduling information is required; and
   (e) means for transmitting, if the quantity of the stored EU data does not exceed the established threshold, all of the stored EU data from the buffer without requiring scheduling information.
Item 75. An integrated circuit (IC) comprising:
   (a) a buffer;
   (b) means for generating enhanced uplink (EU) data and storing the EU data in the buffer;
   (c) means for establishing a threshold for the quantity of the stored EU data; and
   (d) means for transmitting, if the established threshold is set to zero, an initial EU data transmission request message including a request for a desired transport format combination (TFC) or data traffic indicator, the initial EU data transmission request message indicating that EU data is available for transmission and scheduling information is required.
Item 76. An integrated circuit (IC) comprising:
   (a) a buffer;
   (b) means for generating enhanced uplink (EU) data and storing the EU data in the buffer;
   (c) means for receiving a scheduling message that schedules one or more allowed EU data transmissions; and
   (d) means for transmitting all of the EU data stored in the buffer when the allowed EU data transmissions are sufficient to support transmission of all of the EU data stored in the buffer.
Item 77. An integrated circuit (IC) comprising:
   (a) a buffer;
   (b) means for generating enhanced uplink (EU) data and storing the EU data in the buffer;
   (c) means for receiving a scheduling message that schedules one or more allowed EU data transmissions; and
   (d) means for transmitting a portion of the EU data stored in the buffer along with a desired transport format combination (TFC) or detailed traffic volume measurement (TVM) information when the allowed EU data transmissions are not sufficient to support transmission of all of the EU data stored in the buffer.
Item 78. An integrated circuit (IC) comprising:
   (a) a buffer;
   (b) means for generating enhanced uplink (EU) data and storing the EU data in the buffer;
   (c) means for transmitting a desired transport format combination (TFC) or data traffic indicator in at least one physical control field on an EU dedicated physical control channel (EU-DPCCH); and
   (d) means for transmitting a portion of the EU data stored in the buffer along with a medium access control (MAC) header with a field including the desired TFC or detailed traffic volume measurement (TVM) information.
Item 79. An integrated circuit (IC) comprising:
   (a) a buffer;
   (b) means for generating enhanced uplink (EU) data and storing the EU data in the buffer; and
   (c) means for transmitting all of the stored EU data along with a desired transport format combination (TFC) or detailed traffic volume measurement (TVM) information.
Item 80. An integrated circuit (IC) comprising:
   (a) a buffer;
   (b) means for generating enhanced uplink (EU) data and storing the EU data in the buffer;
   (c) means for establishing a threshold for the quantity of the stored EU data; and
   (d) means for transmitting all of the stored EU data from the buffer of the WTRU, along with a desired transport format combination (TFC) or detailed traffic volume measurement (TVM) information, if the quantity of the stored EU data does not exceed the established threshold.

## Claims

1. A method for transferring enhanced uplink, EU, data implemented by a wireless transmit/receive unit, WTRU, comprising:
storing EU data in a buffer of the WTRU, wherein the EU data is associated with a plurality of data flows, wherein the plurality of data flows are associated with a plurality of priority classes;
transmitting an EU data transmission request message including traffic volume measurement, TVM, information, wherein the TVM information includes an indication of an amount of EU data stored in the buffer and an indication of an amount of EU data in the buffer associated with an individual data flow;
receiving an EU data scheduling message;
generating a medium access control, MAC, protocol data unit, PDU, for transmitting EU data, wherein an amount of EU data included in the MAC PDU is based on the received EU data scheduling message, and wherein on a condition that all of the EU data stored in the buffer is not included in the MAC PDU, transmitting another EU data transmission request message for the EU data that is not included in the MAC PDU, wherein the another EU data transmission request message is multiplexed into the MAC PDU with the included EU data; and
transmitting the MAC PDU.

2. The method of claim 1 wherein the EU data scheduling message is received from a Node-B.

3. The method of claim 1 wherein the TVM includes an indication of a priority associated with the individual data flow.

4. The method of claim 1 wherein the EU data transmission request message is transmitted to a Node-B.

5. A wireless transmit/receive unit, WTRU, comprising:
means for storing enhanced uplink, EU, data in a buffer of the WTRU, wherein the EU data is associated with a plurality of data flows, wherein the plurality of data flows are associated with a plurality of priority classes;
means for transmitting an EU data transmission request message including traffic volume measurement, TVM, information, wherein the TVM information includes an indication of an amount of EU data stored in the buffer and an indication of an amount of EU data in the buffer associated with an individual data flow;
means for receiving an EU data scheduling message;
means for generating a medium access control, MAC, protocol data unit, PDU, for transmitting EU data, wherein an amount of EU data included in the MAC PDU is based on the received EU data scheduling message, and wherein on a condition that all of the EU data stored in the buffer is not included in the MAC PDU, transmitting another EU data transmission request message for the EU data that is not included in the MAC PDU, wherein the another EU data transmission request message is multiplexed into the MAC PDU with the included EU data; and
means for transmitting the MAC PDU.

6. The WTRU of claim 5 wherein the EU data scheduling message is received from a Node-B.

7. The WTRU of claim 5 wherein the TVM includes an indication of a priority associated with the individual data flow.

8. The WTRU of claim 5 wherein the EU data transmission request message is transmitted to a Node-B.
